# EUROPÄISCHE PATENTSCHRIFT

(11) **EP 3 268 705 B1**
(45) Veröffentlichungstag und Bekanntmachung des Hinweises auf die Patenterteilung: **24.11.2021**
(21) Anmeldenummer: 16709260.0
(22) Anmeldetag: 11.02.2016
(51) Int. Cl.: G01H 3/08, G01S 3/80, G01V 1/00, G01S 7/52, G01S 15/66, G01S 3/803

(54) **VERFAHREN ZUM AUFLÖSEN EINES SCHIFFFAHRZEUGVERBANDS SOWIE WASSERFAHRZEUG UND VORRICHTUNG**
METHOD FOR SEPARATING A GROUP OF SHIPS, AND WATERCRAFT AND DEVICE
PROCÉDÉ PERMETTANT DE RÉSOUDRE UNE FLOTTE DE NAVIRES ET EMBARCATION ET DISPOSITIF

(30) Priorität: 12.03.2015 DE 102015103635
(43) Veröffentlichungstag der Anmeldung: 17.01.2018
(73) Patentinhaber: ATLAS ELEKTRONIK GmbH, 28309 Bremen (DE)
(72) Erfinder: MEERPOHL, Gregor, 27793 Wildeshausen (DE)
(74) Vertreter: thyssenkrupp Intellectual Property GmbH
(86) Internationale Anmeldenummer: PCT/DE2016/100061
(87) Internationale Veröffentlichungsnummer: WO 2016/141920

(56) Entgegenhaltungen:
- WO-A1-2014/023294
- US-A- 5 216 640

## Beschreibung

Die Erfindung betrifft ein Verfahren zum Auflösen eines Schifffahrzeugverbands, insbesondere eines militärischen Schifffahrzeugverbandes, oder einer Ansammlung von Wasserfahrzeugen, wobei der Schifffahrzeugverband oder die Ansammlung von Wasserfahrzeugen wenigstens zwei Wasserfahrzeuge aufweist und die Wasserfahrzeuge Unterwasserschallwellen aussenden, sowie eine Vorrichtung zur Durchführung des Verfahrens und ein Wasserfahrzeug. Das Verfahren ermöglicht es außerdem, einzelne Schifffahrzeuge zu erkennen.

Ein militärischer Schifffahrzeugverband umfasst regelmäßig unterschiedlichste Wasserfahrzeuge. Beispielsweise sind um einen Flugzeugträger Versorgungsschiffe, Zerstörer, Kreuzer und U-Boote angeordnet. Insbesondere eine Überwachung aus großer Entfernung scheitert häufig daran, dass die verschiedenen Wasserfahrzeuge in einem kleinen Peilungsbereich detektiert werden und somit nicht getrennt erkannt werden.

Um die einzelnen Schiffe/Wasserfahrzeuge des Schifffahrzeugverbandes zu identifizieren und zu vereinzeln sowie deren Fahrrouten/Peilungen zu ermitteln, müssen gesonderte Aufklärungsmissionen unternommen werden. Hierzu kann beispielsweise ein Unterwasserlaufkörper eingesetzt werden oder ein U-Boot verwendet werden, welches sich dem Schifffahrzeugverband jedoch sehr dicht nähern muss. Insbesondere in einem militärischen Zwischenfall kann das zu einem hohen Risiko des aufklärenden Fahrzeugs führen.

Aufgabe der Erfindung ist es, den Stand der Technik zu verbessern.

Gelöst wird die Aufgabe durch ein Verfahren zum Auflösen eines Schifffahrzeugverbands, insbesondere eines militärischen Schifffahrzeugverbands, oder einer Ansammlung von Wasserfahrzeugen, wobei der Schifffahrzeugverband oder die Ansammlung von Wasserfahrzeugen wenigstens zwei Wasserfahrzeuge aufweist und die Wasserfahrzeuge Unterwasserschallwellen aussenden, und das Verfahren folgende Schritte umfasst:
- Empfangen der Unterwasserschallwellen mittels einer Sonarantenne während einer Zeitmessreihe [t₀-t_{M-1}] mit M Messzeitpunkten,
- Ermitteln der Einzelspektren für jeden Beam eines Beambereichs mit N Beams und für jeden Messzeitpunkt, sodass NxM Einzelspektren vorliegen, wobei jedes Einzelspektrum einen Frequenzbereich mit Einzelfrequenzen und zu jeder Einzelfrequenz eine zugehörige Amplitude aufweist,
- Ermitteln einer Maximalamplitude zu jeder Einzelfrequenz über den gesamten Beambereich für jeden Messzeitpunkt und zugehöriges Ermitteln des zu der Maximalamplitude zugehörigen Beams,
- Ermitteln einer Gesamtamplitude basierend auf der ermittelten Maximalamplitude zu jeder Frequenz über die Zeitmessreihe und Notation eines jeweils zugehörigen zeitlichen Beamverlaufs B(t) zu jeder Gesamtamplitude und/oder zu jeder Frequenz, sodass ein Gesamtspektrum mit jeweils einem zugehörigen zeitlichen Beamverlauf B(t) vorliegt,
- Ermitteln der K stärksten Gesamtamplituden des Gesamtspektrums oder der K Gesamtamplituden, welche oberhalb einer Schwellenamplitude liegen, wobei K kleiner als die oder gleich der Anzahl der Einzelfrequenzen ist.
- insbesondere Ermitteln der K1 stärksten Gesamtamplituden des Gesamtspektrums mit überwiegend stetigen Peilungsverlauf, wobei K_{gesamt} = K + K1 kleiner als die oder gleich der Anzahl der Einzelfrequenzen ist.
- Bestimmen und Auswählen charakteristischer Beamverläufe der K Gesamtamplituden,
- Bilden eines Analysespektrums der den ausgewählten Beamverläufen zugehörigen Gesamtamplituden und
- Durchführen einer Mustererkennung anhand des gebildeten Analysespektrums, sodass eines der Wasserfahrzeuge identifiziert wird.

Somit ist es möglich, ein oder mehrere Schiffe zu erkennen sowie einzelne Schiffe des Schifffahrzeugverbandes zu identifizieren oder diese zu erkennen, die Anzahl der Schiffe genau zu spezifizieren und die Peilungen der einzelnen Schiffe genau zu bestimmen.

### Folgendes Begriffliche sei erläutert:

Unter einem "Auflösen eines Schifffahrzeugverbandes" ist insbesondere ein Vereinzeln des Schifffahrzeugverbandes zu verstehen, nach welchem die einzelnen Schiffe und Wasserfahrzeuge des Schifffahrzeugverbandes ermittelbar sind. Mithin wird durch das Auflösen nicht nur geklärt, wie viele Schiffe sich in welcher Peilung befinden, sondern es kann auch der Schiffstyp und gegebenenfalls sogar das genaue Schiff ermittelt werden.

Ein "Wasserfahrzeug" umfasst sämtliche bemannten und unbemannten Fahrzeuge, welche sich auf oder unter dem Wasser befinden oder entsprechend fortbewegen.

Insbesondere aufgrund von Schraubengeräuschen werden "Unterwasserschallwellen" von jedem einzelnen Wasserfahrzeug des Schifffahrzeugverbandes ausgesandt. Diese Unterwasserschallwellen propagieren innerhalb des Wassers, sodass auch in entsprechender Entfernung diese Unterwasserschallsignale empfangen werden können.

Diese Unterwasserschallwellen können insbesondere mit einer "Sonarantenne" aufgenommen werden. Diese Sonarantenne umfasst dabei insbesondere mehrere Hydrophone, welche zumeist piezokeramische Elemente aufweisen. Diese piezokeramischen Elemente wandeln die Druckdifferenzen der Unterwasserschallwellen in entsprechende elektrische Signale um und bilden somit die Unterwasserschallwellen elektronisch ab. Insbesondere handelt es sich bei der Sonarantenne um die Sonarantenne eines passiven Sonars, welches "horchend" die Wasserschallwellen aufnimmt.

Eine Zeitmessreihe [t₀-t_{M-1}] umfasst einen Zeitbereich mit jeweils einzelnen Messzeitpunkten. Bei einer homogenen Verteilung ergeben sich die einzelnen Messzeitpunkte durch die Repititionsrate des auswertenden Sonars. Beispielsweise umfasst eine Zeitmessreihe einen Zeitraum von 5 Minuten. Bei einer üblichen Repititionsrate von einer Messung pro Sekunde ergeben sich somit 600 Messzeitpunkte, zu denen jeweils eine Messung erfolgt oder entsprechend ausgewertet wird. Über einen wesentlich größeren Messzeitraum wie beispielsweise eine Stunde hinweg, kann die Messzeitreihe quasi als (5min) Fenster über diesen Zeitraum hinweg immer weiter verschoben werden. Praktisch kann quasi kontinuierlich gemessen werden, wobei sowohl das Zeitfenster für die Vergangenheit ausgewertet oder ab "jetzt" gestartet wird.

Ein "Beam" entspricht einer richtungsabhängigen schmalsektoralen Messung der Sonarantenne. Teilweise wird diesbezüglich auch von Beamklasse gesprochen, was vorliegend synonym zu verstehen ist. Über einen entsprechenden Beobachtungsbereich (Beambereich) werden die Signale an den einzelnen Hydrophonen der Sonarantenne rechentechnisch zeitlich so verschoben, dass das an den Hydrophonen anliegende Signal jeweils aus der entsprechenden Betrachtungsrichtung käme. Der betrachtete Beambereich kann dabei sowohl eine Rundumsicht als auch eine sektorale Betrachtung gewährleisten. Die Anzahl der Beams ist quasi ein Maß für die Auflösung des Beambereichs. Zudem können die Beams den Beambereich faktisch abdecken. Dabei können die einzelnen Beams jeweils gleichwinklig zueinander beabstandet sein oder auch inhomogene Winkelabstände aufweisen.

Für ein "(Einzel) Spektrum" werden die entsprechend an der Sonarantenne anliegenden Zeitsignale in Frequenzwerte umgewandelt und auf der Abszisse aufgetragen. Auf der Ordinate wird zu jeder ermittelten Frequenz die entsprechende Amplitude aufgemerkt. Dabei ist die Amplitude insbesondere ein Maß zur für diese Frequenz anliegenden (Schall-)Energie. Ein "Einzelspektrum" ist insbesondere für einen bestimmten Zeitpunkt der Zeitmessreihe ein für einen bestimmten Beam bestimmtes Spektrum.

Um einen Amplitudenwert zu bestimmen, wird insbesondere ein schmalbandiger Frequenzbereich verwendet, welcher vorliegend als "Einzelfrequenz" bezeichnet wird. Sämtliche betrachtete Einzelfrequenzen zusammen beschreiben dabei vorliegend den im Sinne der Erfindung benutzten Begriffes des "Frequenzbereichs (f₀-f_{END}).

Eine "Maximalamplitude" ist insbesondere die Amplitude zu einer bestimmten Einzelfrequenz mit dem höchsten Amplitudenwert. Das Ermitteln der Maximalamplitude erfolgt dabei über den gesamten Beambereich, sodass bei allen Spektren für eine dezidierte Einzelfrequenz in allen Beams "geschaut" (Amplitudenvergleich und Auswahl) wird, welches die entsprechende Maximalamplitude ist. Dadurch, dass dies zu jedem Messzeitpunkt erfolgt, liegt ein Maximaleinzelspektrum zu jedem einzelnen Messzeitpunkt vor.

Beim "Ermitteln der Maximalamplitude zugehörigen Beams" wird zudem zu jeder ermittelten Maximalamplitude beispielsweise in einer Liste der zugehörige Beam notiert. Somit kann quasi die Richtung aus der die Maximalamplitude ermittelt wurde jeweils bestimmt und/oder angezeigt werden.

Die "Gesamtamplitude" ist insbesondere ein Maß für die über die Zeit anliegende Energie bei einer Frequenz. Beispielsweise kann lediglich ein reines Aufaddieren der einzelnen Maximalamplituden erfolgen. Auch eine arithmetische Mittelwertbildung kann dabei eingesetzt werden.

Unter "Notation" wird insbesondere das Aufnotieren und Verknüpfen einer jeweiligen Information verstanden. Vorliegend wird zu jeder einzelnen Gesamtamplitude und/oder Frequenz der über die Zeitmessreihe erfolgte Beamverlauf notiert.

Der "Beamverlauf B(t)" ist ein zeitlicher Verlauf des Beams. Für den Fall, dass ein Beam einer Peilung gleichgesetzt wird, kann somit der Einzelverlauf zu einer bestimmten Amplitude oder bestimmten Frequenz nachverfolgt werden.

Da davon ausgegangen werden kann, dass die einzelnen Schiffe des Schifffahrzeugverbandes starke Unterwasserschallsignale aussenden und um damit die einzelnen Rechenschritte auch in endlicher Zeit durch einen Rechner gelöst werden können, werden die "K-stärksten Gesamtamplituden" des Gesamtspektrums ausgewählt. Wenn beispielsweise der Frequenzbereich 800 Einzelfrequenzen aufweist, können mithin beispielsweise die stärksten 100 Gesamtamplituden ausgewählt werden. Mithin ist dabei davon auszugehen, dass sämtliche oder zumindest relativ viele dieser stärksten Gesamtamplituden von den Schiffen des Schifffahrzeugverbandes ausgesandt wurden. Alternativ werden lediglich die Gesamtamplituden ausgewählt, welche oberhalb einer eingestellten Schwellenamplitude liegen. Dies ist insbesondere dann vorteilhaft, wenn Signale eines Schifffahrzeugverbands mit vielen (mehr als zehn) Wasserfahrzeugen analysiert werden. Zusätzlich kann bei den beispielsweise bis zu 200 stärksten Gesamtamplituden überprüft werden, ob sie einen überwiegend stetigen Peilungsverlauf haben. Auch diese Gesamtamplituden mit überwiegend stetigem Peiungsverlauf können ausgewählt werden.

Eine "Schwellenamplitude" ist ein Amplitudenwert, welchen die Gesamtamplituden betragsmäßig übertreffen müssen, um weiter verarbeitet zu werden.

Ein "charakteristischer Beam" der ausgewählten Gesamtamplituden wird insbesondere dadurch ermittelt, dass beispielsweise die Amplituden oder Frequenzen, welche den selben Beamverlauf haben, zusammengefasst werden. Mithin kann davon ausgegangen werden, dass einzelne Schiffe des Schifffahrzeugverbandes leicht unterschiedliche Beamverläufe über die Zeit entwickeln. Somit beruht ein Kerngedanke der Erfindung darauf, dass Gesamtamplituden und/oder Frequenzen gleicher Beamverläufe zusammengefasst werden und einem einzelnen Wasserfahrzeug zugeordnet werden. Mithin sind diese ausgewählten Amplituden und somit die zugehörigen Frequenzen charakteristisch für dieses spezielle Wasserfahrzeug.

Somit können die Frequenzen dieser speziellen zusammengefassten Beamverläufe und die zugehörigen Gesamtamplituden in einem "Analysespektrum" zusammengefasst werden. Dieses Analysespektrum wiederum kann für eine weitere Auswertung verwendet werden.

Insbesondere kann dieses Analysespektrum für ein "Mustererkennen" verwendet werden, anhand dessen einzelne Wasserfahrzeuge identifiziert werden können.

Somit können die aufgelösten einzelnen Wasserfahrzeuge nach ihrer Klasse (Flugzeugträger, U-Boot, Zerstörer, Fregatte) und nach der jeweiligen Peilung aufgeschlüsselt werden.

Bei der Mustererkennung handelt es sich insbesondere um eine so genannte ALPR (Automatic Line Pattern Recognition). Beispielsweise ist eine derartige ALPR in der DE 10 2012 015 637 A1 offenbart.

Um das Verfahren zu verbessern, wird insbesondere eine ermittelte Maximalamplitude lediglich dann verwendet, wenn es sich um ein lokales Maximum handelt.

So kann bei einer (ersten) Ermittlung der Maximalamplitude die jeweilige Amplitude direkt oberhalb und unterhalb der betrachteten Frequenz mit der ermittelten Amplitude verglichen werden. Sollte sich ein höherer Amplitudenwert ergeben, wird diese Maximalamplitude nicht verwendet, da es sich nicht um ein lokales Maximum handelt. Mithin handelt es sich also bei den ermittelten Maximalamplituden um lokale Maxima.

In einer weiteren Ausführungsform der Erfindung ist ein Beam oder sind mehrere Beams einer Peilung und/oder mehrerer Peilungen und/oder der Beamverlauf in einen Peilungsverlauf überführt.

Der Unterschied zwischen Beam und Peilung liegt insbesondere darin, dass bei einer Peilung zumeist noch gewisse Interpolationen mit durchgeführt wurden, welche die eigentliche Peilgenauigkeit erhöhen. Somit kann der eigentliche Peilungsverlauf verbessert werden. Teilweise werden Beam und Peilung synonym verwendet, sodass dies vorliegend lediglich der Klarstellung dient. Analog gelten diese Ausführungen für Beamklassen und Peilungsklassen.

Um beispielsweise den weiteren Kurs - bei Kenntnis der Entfernung - eines identifizierten Wasserfahrzeuges vorausbestimmen zu können oder einen Peilungsverlauf interpolieren zu können, kann ein Peilungsverlauf zu einem der Wasserfahrzeuge aufgezeichnet und/oder dargestellt werden. Bei der Darstellung kann dies insbesondere für einen Bediener offensichtlich gemacht werden, sodass dieser entsprechend der Peilungsverläufe Handlungen initiieren kann.

In einer weiteren Ausführungsform ist das Auflösen ein Vereinzeln des Schifffahrzeugverbandes und/oder ein Identifizieren eines der Wasserfahrzeuge. Dies liegt insbesondere daran, dass das Vereinzeln und das Identifizieren mithin "Hand in Hand" gehen.

Wie bereits ausgeführt, kann die Mustererkennung einer Automatic Line Pattern Recognition (ALPR) umfassen.

Um unterschiedliche Frequenzen auswerten zu können, kann die Sonarantenne eine LOFAR-auswertefähige Antenne und/oder DEMON-auswertefähige Antenne sein und/oder aus unterschiedlichen Unterwasserantenne gebildet werden.

Dabei steht DEMON für Detection of Envelope Moduolation on Noise und LOFAR für eine Low Frequency Analysis and Recording. Mittels einer LOFAR-auswertefähige -Antenne oder entsprechend einer LOFAR-Analyse wird ein Frequenzspektrum oder entsprechend ein Amplitudenspektrum eines von einem Fahrzeug abgestrahlten Betriebsgeräusches erzeugt, bei dem Frequenzlinien im niederfrequenten Bereich aus dem allgemeinen Rauschen herausragen. Da diese Frequenzlinien durch die Antriebssystem und sonstige Maschinen an Bord des Fahrzeugs verursacht werden, ist dieser niederfrequente Bereich vorteilhaft gut geeignet, um Fahrzeuge zu detektieren und zu klassifizieren.

Bei der DEMON-Analyse wird der hochfrequente Bereich des empfangenen Geräusches des detektierten Fahrzeugs über einen Bandpass und einen Hüllkurvendemodulator demoduliert. Das daraus erzeugte Frequenzspektrum oder entsprechend Amplitudenspektrum liefert Auskunft über die Anzahl der antreibenden Propeller, ihre Blattzahl und die Drehzahl aus denen dann auf den Fahrzeugtyp geschlossen werden kann. Für weitere Informationen wird wiederum auf die DE 10 2012 015 637 A1 verwiesen.

Um die Effektivität des Verfahrens zu optimieren, kann das Verfahren für zwei Sonarantennen oder mehrere Sonarantennen parallel oder ergänzend durchgeführt werden. Dabei können insbesondere unterschiedliche Frequenzbereiche abgefragt werden.

Ein großer Vorteil vorliegend ist, dass das beschriebene Verfahren automatisiert beispielsweise mittels elektronischer Rechner oder Schaltkreise durchgeführt werden kann.

Bei dieser automatisierten Durchführung kann auf einen Bediener verzichtet werden, sodass am Ende einem Bediener lediglich die Ergebnisse präsentiert werden. Dabei können die Ergebnisse beispielsweise in einem Peilungsverlauf mit jeweils zugehörigen Schiffstypen dargestellt werden.

Um das genaue Schiff zu identifizieren oder zu einem späteren Zeitpunkt erneut zu identifizieren, kann das Wasserfahrzeug mit seinem entsprechenden Analysespektrum in eine Datenbank aufgenommen oder entsprechend mit bereits vorliegenden Analysespektren verglichen werden. Somit kann eine genaue Erkenntnis der einzelnen Schiffe und der Stärke einer Flotte beziehungsweise Marine ermittelt werden.

Insbesondere um in einer Bedrohungssituation entsprechend reagieren zu können oder um ein dezidiertes Schiff genau überwachen zu können, kann eines der Wasserfahrzeuge anhand des Analysespektrums getracked werden. Bei einem solchen Tracken werden die Bewegung und das Verhalten des Wasserfahrzeugs permanent überwacht, sodass entsprechende Maßnahmen je nach Verhalten eingeleitet werden können.

In einem weiteren Aspekt der Erfindung wird die Aufgabe gelöst durch eine Vorrichtung, insbesondere Sonaranlage, welche derart eingerichtet ist, dass ein zuvor beschriebenes Verfahren durchführbar ist. Bei einer derartigen Sonaranlage handelt es sich insbesondere um eine passive Sonaranlage, wobei auch aktive Sonaranlagen verwendet werden können, wobei beispielsweise nicht zwingend ein Sendeimpuls ausgesandt wird.

Weiterhin wird die Aufgabe gelöst durch ein Wasserfahrzeug, welches eine zuvor beschriebe Vorrichtung aufweist.

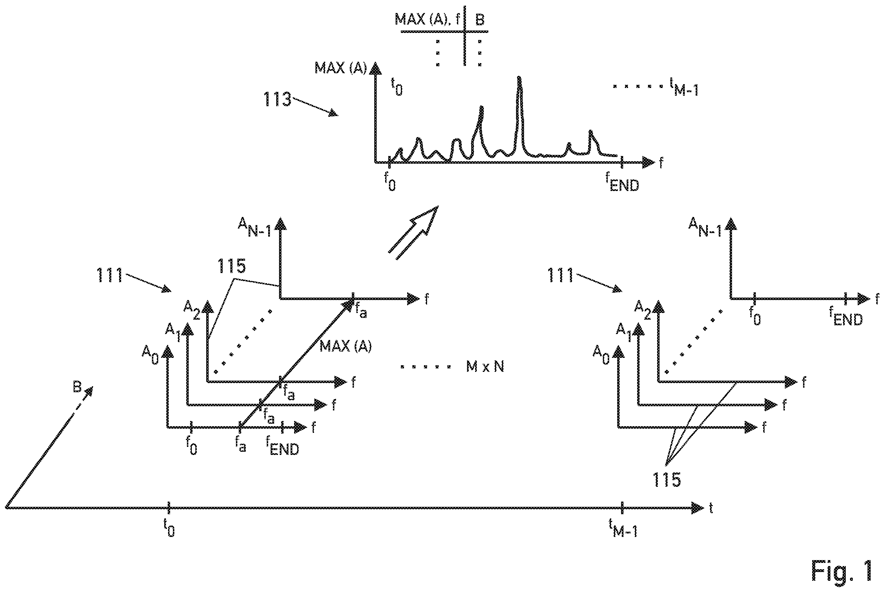

Im Weiteren wird die Erfindung anhand eines Ausführungsbeispiels näher erläutert. Es zeigen
- Figur 1: eine stark schematische Darstellung der ermittelten Einzelspektren für die jeweiligen Beams in Abhängigkeit der Zeit sowie das aus den Einzelspektren ermittelte Maximaleinzelspektrum,
- Figur 2: eine stark schematische Darstellung wie aus dem Maximaleinzelspektrum das gesamte Spektrum ermittelt wird sowie

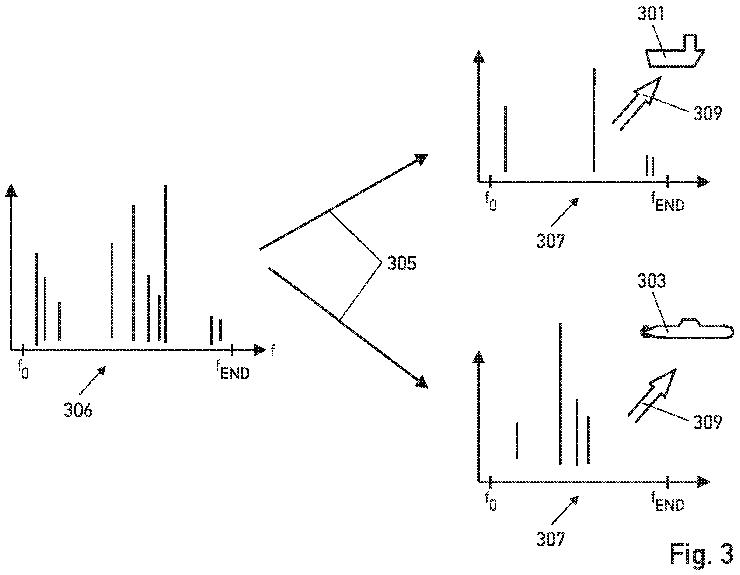

- Figur 3: wie aus einem reduzierten Gesamtspektrum die einzelnen Analysespektren gewonnen werden.

Ein passives Sonar eines horchenden U-Bootes misst die durch einen militärischen Schifffahrzeugverband ins Wasser eingebrachten Schallwellen. Zu dem militärischen Schifffahrzeugverband gehören zum einen ein U-Boot 303 und ein Flugzeugträger 301.

Die einzelnen Hydrophone des passiven Sonars des auf der Lauer liegenden U-Bootes empfangen die ausgesandten Wasserschallsignale und wandeln diese in elektrische Signale um. Die sich dadurch ausbildenden Spannungsverläufe werden entsprechend aufbereitet und ausgewertet und für einen Sektor mit einem Sektorwinkel von 140° mit 1.024 Beams ermittelt, welche jeweils zueinander den gleichen Winkelabstand aufweisen.

Dies erfolgt jede Sekunde, sodass eine zeitliche Messreihe von M=8.000 Zeitmesswerten vorliegt. Für jeden Zeitpunkt t₀ bis t₇₉₉₉ werden 1.024 Spektren 111 ermittelt, sodass jeweils Einzelspektren 115 vorliegen.

Diese Einzelspektren 115 umfassen jeweils ein Amplitudensignal, wobei der betrachtete Frequenzbereich für 800 Einzelfrequenzen jeweils eine Amplitude ermittelt.

Mithin liegen am Ende NxM (1.024x8.000=8.192.000) Einzelspektren 115 vor. Dabei wird zu jedem Zeitpunkt, zum Beispiel t₀, für jede Frequenz f_{A} die stärkste Amplitude MAX(A) ermittelt. Zudem wird der Beam des Spektrums mit der Maximalamplitude notiert.

Dies wird über alle 8.000 Messzeitpunkte durchgeführt. Somit ergeben sich insgesamt 8.000 Maximaleinzelspektren 113. Zusätzlich zu jedem dieser Maximaleinzelspektren 113 wird eine Tabelle notiert, welche jedem Amplitudenwert des Maximaleinzelspektrums 113 einen Beam zuordnet.

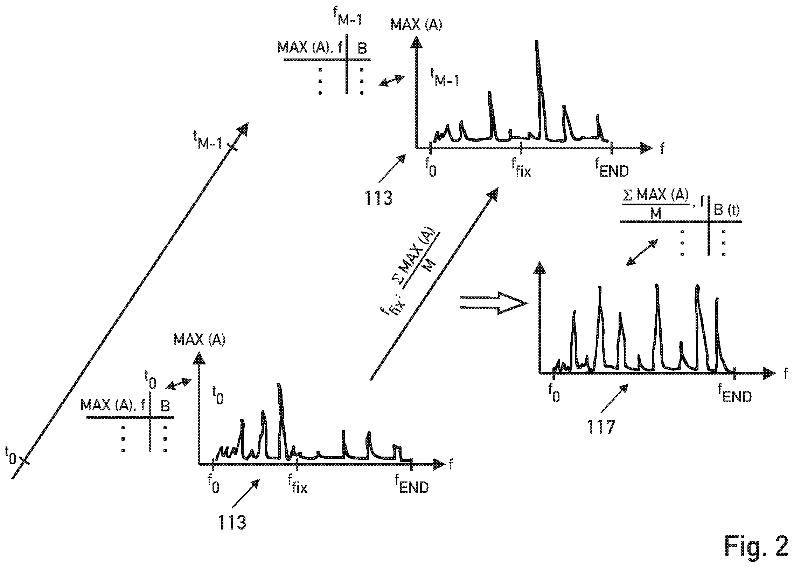

Anschließend (Figur 2) werden sämtliche Amplituden der Einzelmaximalspektren 113 für jeden Messzeitpunkt für eine feste Frequenz f_{fix}, wobei f_{fix} von f₀ zu F_{END} läuft, aufaddiert und durch die Anzahl der Messzeitpunkte (hier 8.000) geteilt, sodass ein Mittelwert bezüglich der Maximalamplituden vorliegt. Zudem wird für jede gemittelte Maximalamplitude der zeitliche Verlauf B(t) notiert und das Gesamtspektrum 117 ermittelt.

Aus diesem Gesamtspektrum 117 werden die 100 stärksten Amplituden sowie maximal 100 weitere stärkste Amplituden mit überwiegend stetigem Peilungsverlauf mit dem zugehörigen Beamverlauf extrahiert und in ein reduziertes Spektrum 306 überführt.

Anhand des reduzierten Gesamtspektrums 306 werden die Analysespektren 307 gebildet 305.

Dabei werden die Peilungsverläufe der maximal 200 stärksten Signale des reduzierten Gesamtspektrums 306 verglichen und geordnet. Vorliegend wurden jeweils vier Linien mit jeweils gleichem Peilungsverlauf aufgefunden.

Diese sind im Analysespektrum 307 dargestellt. Auf die Analysespektren 307 wird eine Mustererkennung 309 (ALPR) angewandt. Dabei konnte sowohl ein Flugzeugträger 301 als auch das U-Boot 303 identifiziert werden. Zusätzlich wird ein Bediener der Peilungsverlauf des Flugzeugträgers 301 und des U-Boots 303 aufgezeigt.

### Bezugszeichenliste

- 111: Spektren
- 113: Maximaleinzelspektrum
- 115: Einzelspektren
- 117: Gesamtspektrum
- 301: Flugzeugträger
- 303: U-Boote
- 305: Bilden des Analysespektrums
- 306: reduziertes Gesamtspektrum
- 307: Analysespektrum
- 309: Mustererkennung

## Patentansprüche

1. Verfahren zum Auflösen eines Schifffahrzeugverbands, insbesondere eines militärischen Schifffahrzeugverbands, oder einer Ansammlung von Wasserfahrzeugen, wobei der Schifffahrzeugverband oder die Ansammlung von Wasserfahrzeugen wenigstens zwei Wasserfahrzeuge (301, 303) aufweist und die Wasserfahrzeuge Unterwasserschallwellen aussenden, und das Verfahren folgende Schritte umfasst:
- Empfangen der Unterwasserschallwellen mittels einer Sonarantenne während einer Zeitmessreihe [t₀-t_{M-1}] mit M Messzeitpunkten,
- Ermitteln der Einzelspektren (115) für jeden Beam (B) eines Beambereichs mit N Beams und für jeden Messzeitpunkt, sodass NxM Einzelspektren (111) vorliegen, wobei jedes Einzelspektrum einen Frequenzbereich (f₀-f_{END}) mit Einzelfrequenzen und zu jeder Einzelfrequenz eine zugehörige Amplitude (A) aufweist, **dadurch gekennzeichnet, dass** das Verfahren die folgenden Schritte umfasst:
- Ermitteln einer Maximalamplitude (MAX[A]) zu jeder Einzelfrequenz über den gesamten Beambereich für jeden Messzeitpunkt und zugehöriges Ermitteln des zu der Maximalamplitude zugehörigen Beams (B),
- Ermitteln einer Gesamtamplitude basierend auf der ermittelten Maximalamplitude zu jeder Einzelfrequenz über die Zeitmessreihe und Notation eines jeweils zugehörigen zeitlichen Beamverlaufs B(t) zu jeder Gesamtamplitude und/oder zu jeder Einzelfrequenz, sodass ein Gesamtspektrum mit jeweils einem zugehörigen zeitlichen Beamverlauf B(t) vorliegt,
- Ermitteln der K stärksten Gesamtamplituden des Gesamtspektrums oder der K Gesamtamplituden, welche oberhalb einer Schwellenamplitude liegen, wobei K kleiner als die oder gleich der Anzahl der Einzelfrequenzen ist,
- Bestimmen und Auswählen charakteristischer Beamverläufe der K Gesamtamplituden,
- Bilden (305) eines Analysespektrums der den ausgewählten Beamverläufen zugehörigen Gesamtamplituden und
- Durchführen einer Mustererkennung anhand des gebildeten Analysespektrums, sodass eines der Wasserfahrzeuge identifiziert wird.

2. Verfahren nach Anspruch 1, **dadurch gekennzeichnet, dass** eine Maximalamplitude dann verwendet wird, wenn es sich um ein lokales Maximum handelt.

3. Verfahren nach einem der vorherigen Ansprüche, **dadurch gekennzeichnet, dass** ein Beam oder mehrere Beams einer Peilung oder mehrere Peilungen und/oder dass der Beambereich in einen Peilungsbereich und/oder dass der Beamverlauf in einen Peilungsverlauf überführt wird.

4. Verfahren nach einem der vorherigen Ansprüche, **dadurch gekennzeichnet, dass** ein Peilungsverlauf zu einem der Wasserfahrzeuge aufgezeichnet und/oder dargestellt wird.

5. Verfahren nach einem der vorherigen Ansprüche, **dadurch gekennzeichnet, dass** das Auflösen ein Vereinzeln des Schifffahrzeugverbands und/oder ein Identifizieren eines der Wasserfahrzeuge umfasst.

6. Verfahren nach einem der vorherigen Ansprüche, **dadurch gekennzeichnet, dass** die Mustererkennung eine Automatic Line Pattern Recognition (ALPR) umfasst.

7. Verfahren nach einem der vorherigen Ansprüche, **dadurch gekennzeichnet, dass** die Sonarantenne eine LOFAR-auswertefähige -Antenne oder eine DEMON-auswertefähige - Antenne ist oder aus unterschiedlichen Unterwasserantennen gebildet ist.

8. Verfahren nach einem der vorherigen Ansprüche, **dadurch gekennzeichnet, dass** das Verfahren für zwei Sonarantennen oder mehrere Sonarantennen parallel oder ergänzend durchgeführt wird.

9. Verfahren nach einem der vorherigen Ansprüche, **dadurch gekennzeichnet, dass** das Verfahren automatisiert durchgeführt wird.

10. Verfahren nach einem der vorherigen Ansprüche, **dadurch gekennzeichnet, dass** ein identifiziertes Wasserfahrzeug in eine Datenbank mit seinem zugehörigen Spektrum aufgenommen wird und/oder mit bestehenden Spektren verglichen wird.

11. Verfahren nach einem der vorherigen Ansprüche, **dadurch gekennzeichnet, dass** eines der Wasserfahrzeuge anhand des Analysespektrums getrackt wird.

12. Vorrichtung, insbesondere Sonaranlage, mit einer Sonarantenne und Mittel, die eingerichtet sind, die Schritte des Verfahrens nach Ansprüche 1-11 auszuführen.

13. Wasserfahrzeug, welches eine Vorrichtung nach Anspruch 12 aufweist.

## Claims

1. Method for resolving a group of ships - in particular, a formation of naval vessels - or an assemblage of watercraft, wherein the group of ships or the assemblage of watercraft includes at least two watercraft (301, 303), and the watercraft emit underwater sound waves, the method comprising the following steps:
- Receiving the underwater sound waves by means of a sonar antenna during a time measurement series [t₀ - t_{M-1}] with M measurement time points,
- Determining the individual spectra (115) for each beam (B) of a beam zone with N beams and for each measurement time point, so that N x M individual spectra (111) are obtained, wherein each individual spectrum has a frequency range (f₀ - f_{END}) with individual frequencies, and each individual frequency has an associated amplitude (A), **characterized in that** the method comprises the following steps:
- Determining a maximum amplitude (MAX[A]) for each individual frequency over the full beam zone for each measurement time point and correspondingly determining the beam associated with the maximum amplitude,
- Determining an overall amplitude based on the determined maximum amplitude for each frequency over the time measurement series and notation of a temporal beam path B(t) corresponding in each case to each overall amplitude and/or each frequency, thereby producing a total spectrum with, in each case, a corresponding temporal beam path B(t),
- Determining the K greatest overall amplitudes of the total spectrum or the K overall amplitudes lying above a threshold amplitude, wherein K is less than or equal to the number of individual frequencies,
- Determining and selecting characteristic beam paths of the K overall amplitudes,
- Producing (305) an analysis spectrum of the overall amplitudes corresponding to the selected beam paths, and
- Carrying out a pattern recognition process based upon the produced analysis spectrum, so that one of the watercraft is identified.

2. Method according to Claim 1, **characterized in that** a maximum amplitude is used only when it is a local maximum.

3. Method according to one of the preceding claims **characterized in that** a beam or multiple beams of a bearing or multiple bearings and/or the beam zone are converted into a bearing zone and/or the beam path is converted into a bearing path.

4. Method according to one of the preceding claims, **characterized in that** a bearing path for one of the watercraft is recorded and/or displayed.

5. Method according to one of the preceding claims, **characterized in that** the resolution comprises a separation of the group of vessels into individual watercraft and/or an identification of one of the watercraft.

6. Method according to one of the preceding claims, **characterized in that** the pattern recognition comprises an Automatic Line Pattern Recognition (ALPR) process.

7. Method according to one of the preceding claims, **characterized in that** the sonar antenna is an antenna with LOFAR analysis capability and/or an antenna with DEMON analysis capability and/or comprises different underwater antennas.

8. Method according to one of the preceding claims, **characterized in that** the method is implemented for two sonar antennas or multiple sonar antennas in parallel or additionally.

9. Method according to one of the preceding claims, **characterized in that** the method is carried out automatically.

10. Method according to one of the preceding claims, **characterized in that** an identified watercraft is recorded in a database together with its corresponding spectrum and/or is compared with existing spectra.

11. Method according to one of the preceding claims, **characterized in that** one of the watercraft is tracked on the basis of the analysis spectrum.

12. Device - in particular, a sonar system - comprising a sonar antenna and means configured to carry out the method according to any of claims 1-11.

13. Watercraft which is equipped with a device according to Claim 12.

## Revendications

1. Procédé de dispersion d'une flotte de navires, notamment d'une flotte de navires militaire, ou d'un rassemblement de navires, la flotte de navires ou le rassemblement de navires comportant au moins deux navires (301, 303) et les navires émettant des ondes acoustiques sous-marines, et le procédé comprenant les étapes suivantes :
- recevoir les ondes acoustiques sous-marines au moyen d'une antenne sonar lors d'une série de mesures temporelles [t₀-t_{M-1}] avec M instants de mesure,
- détermination des spectres individuels (115) pour chaque faisceau (B) d'une zone de faisceaux à N faisceaux et pour chaque instant de mesure de façon à disposer de NxM spectres individuels (111), chaque spectre individuel comportant une gamme de fréquences (f₀-f_{END}) comprenant des fréquences individuelles et ayant une amplitude (A) associée pour chaque fréquence individuelle,
**caractérisé en ce que** le procédé comprend les étapes suivantes :
- déterminer une amplitude maximale (MAX[A]) pour chaque fréquence individuelle dans toute la zone de faisceaux pour chaque instant de mesure et effectuer une détermination associée du faisceau (B) associé à l'amplitude maximale,
- déterminer une amplitude totale sur la base de l'amplitude maximale déterminée pour chaque fréquence individuelle via la série de mesures temporelles et noter une variation de faisceau temporelle respectivement associé B(t) pour chaque amplitude totale et/ou pour chaque fréquence individuelle de façon à disposer d'un spectre complet présentant une variation de faisceau temporelle associée B(t),
- déterminer les K amplitudes totales les plus fortes du spectre complet ou les K amplitudes totales qui sont supérieures à une amplitude seuil, K étant inférieur ou égal au nombre de fréquences individuelles,
- déterminer et sélectionner des variations de faisceau caractéristiques des K amplitudes totales,
- former (305) un spectre d'analyse des amplitudes totales associées aux variations de faisceau sélectionnées et
- réaliser une reconnaissance de formes à partir du spectre d'analyse formé de façon à identifier l'un des navires.

2. Procédé selon la revendication 1, **caractérisé en ce qu'**une amplitude maximale est utilisée seulement lorsqu'il s'agit d'un maximum local.

3. Procédé selon l'une des revendications précédentes, **caractérisé en ce qu'**un faisceau ou une pluralité de faisceaux d'un gisement ou d'une pluralité de gisements ou de la zone de faisceaux est converti en une variation de gisement et/ou **en ce que** la variation de faisceau est convertie en une variation de gisement.

4. Procédé selon l'une des revendications précédentes, **caractérisé en ce qu'**une variation de gisement de cap par rapport à l'un des navires est enregistrée et/ou affichée.

5. Procédé selon l'une des revendications précédentes, **caractérisé en ce que** la dispersion comprend la séparation de la flotte de navires et/ou une identification de l'un des navires.

6. Procédé selon l'une des revendications précédentes, **caractérisé en ce que** la reconnaissance de formes comprend une reconnaissance automatique de motifs de lignes (ALPR).

7. Procédé selon l'une des revendications précédentes, **caractérisé en ce que** l'antenne sonar est une antenne évaluable LOFAR ou une antenne évaluable DEMON ou est formée de différentes antennes sous-marines.

8. Procédé selon l'une des revendications précédentes, **caractérisé en ce que** le procédé est mis en œuvre en parallèle ou en complément pour deux antennes sonar ou une pluralité d'antennes sonar.

9. Procédé selon l'une des revendications précédentes, **caractérisé en ce que** le procédé est réalisé de manière automatisée.

10. Procédé selon l'une des revendications précédentes, **caractérisé en ce qu'**un navire identifié est enregistré dans une base de données avec son spectre associé et/ou est comparé à des spectres existants.

11. Procédé selon l'une des revendications précédentes, **caractérisé en ce que** l'un des navires est suivi à l'aide du spectre d'analyse.

12. Dispositif, en particulier système sonar, comprenant une antenne sonar et des moyens qui sont conçus pour réaliser les étapes du procédé selon les revendications 1 à 11.

13. Navire comprenant un dispositif selon la revendication 12.
